(19) **Europäisches Patentamt**
**European Patent Office**
**Office européen des brevets**

(11) **EP 1 804 070 B1**

(12) **FASCICULE DE BREVET EUROPEEN**

(45) Date de publication et mention
de la délivrance du brevet:
**18.02.2009 Bulletin 2009/08**

(51) Int Cl.:
***G01S 1/00*** *(2006.01)*

(21) Numéro de dépôt: **05301123.5**

(22) Date de dépôt: **29.12.2005**

(54) **Procédé d'acquisition accelérée de signaux satellitaires**

Verfahren zur beschleunigten Erfassung von Satellitensignalen

Method for fast acquisition of satellite signals

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**04.07.2007 Bulletin 2007/27**

(73) Titulaire: **Alcatel Lucent**
**75008 Paris (FR)**

(72) Inventeur: **Monnerat, Michel**
**31240 L'Union (FR)**

(74) Mandataire: **Hedarchet, Stéphane**
**Alcatel Lucent**
**Intellectual Property & Standards**
**54 rue La Boétie**
**75008 Paris (FR)**

(56) Documents cités:
**US-A1- 2003 083 816      US-A1- 2004 162 084**
**US-A1- 2005 068 229      US-B1- 6 313 786**

**Description**

La présente invention concerne un procédé d'acquisition accélérée de signaux satellitaires de positionnement d'un système de localisation par satellites pour un terminal mobile s'orientant de l'intérieur vers l'extérieur d'un immeuble, ce procédé combinant au mieux un système de télécommunication locale à l'intérieur de l'immeuble et le système de localisation par satellites. On entend par système de télécommunication locale un réseau local sans fil de télécommunication tel que le WIreless FIdelity dit WIFI répondant à la norme IEEE 802.11, ou un système utilisant la technologie radio de réseau local Ultra Wide Band ou UWB, ou bien encore un système capable de fonctionner selon le protocole de communication à portée réduite appelé Bluetooth. On entend par système de localisation satellitaire un système de positionnement par satellites de type GPS ("Global Positioning System" en anglais), Galileo, ou Glonass.

L'invention concerne également un système hybride de localisation destiné à l'acquisition accélérée de signaux satellitaires de positionnement pour un tel terminal mobile.

Dans un système de positionnement par satellites utilisant des récepteurs du type GNSS ("Global Navigation Satellite System") tels qu'un récepteur GPS ou Galileo, les signaux de données permettant au récepteur de calculer son positionnement proviennent de différents satellites (quatre au minimum pour déterminer les quatre inconnues x,y, z et t). Il est bien connu par l'homme de métier que le positionnement par un tel système suppose au préalable deux types de traitement au niveau du récepteur.

Le premier consiste à acquérir le signal provenant d'au moins quatre satellites, le second consiste à évaluer la distance séparant le récepteur des satellites dont le signal a été reçu. L'interface entre un système de navigation par satellites (RNSS pour "Radio Navigation Satellite System") et le récepteur utilisateur repose sur un signal radio électrique, lui même reposant sur une technique de spectre étalé, bien connue de l'homme de l'art. Les techniques de spectre étalé, dans leur forme les plus courantes telle que sur le GPS code C/A, Galileo F/Nav, reposent sur l'utilisation d'un code pseudo aléatoire périodique. Dans le cadre du GPS, ce code possède une période de 1 milliseconde (ms). Ce code se rajoute à un message de navigation numérique, ce message comportant un certain nombre d'informations nécessaires au calcul de la position du récepteur, typiquement :

- Référence horaire, bien connue sur GPS sous le nom de TOW ("Time of Week") correspondant à l'heure d'émission du message,
- La position du satellite au moment de l'envoi du message, bien connue sur GPS sous le nom d'éphémérides,
- Certaines corrections à apporter sur l'horloge bord du satellite, bien connues sur GPS sous le nom de "clock corrections" (corrections d'horloge en anglais), visant à corriger la Référence horaire par rapport à l'horloge globale du système,
- Certains paramètres de correction de propagation, tels que des paramètres de corrections de vitesse de propagation des ondes électromagnétiques dans les couches de l'atmosphère (en particulier la ionosphère),
- La position approximative des autres satellites de la constellation via des données dites d'almanachs.

Le débit des données est bien entendu plus lent que le débit du code d'étalement périodique. Typiquement sur le signal GPS SPS (GPS Satellite Positioning System), le débit de données s'élève à 50 bits par seconde, alors que celui du code est de 1,023 millions de bribes par seconde. Un code complet étant constitué de 1023 bribes (soit 1ms). L'ensemble des données ajoutées modulo 2 au code d'étalement est transmis sur une porteuse. Typiquement sur GPS, la porteuse se trouve à 1,57542 GHz.

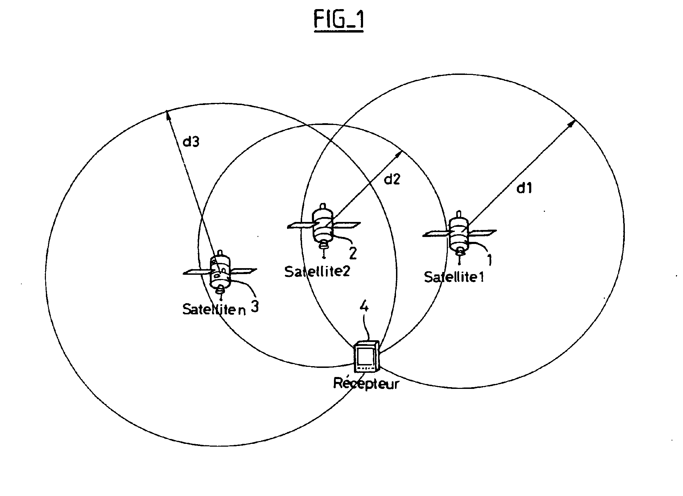

La détermination de la position du récepteur est représentée en figure 1. Le principe consiste pour un récepteur [4] à déterminer la distance le séparant d'au moins trois satellites de la constellation référencée par des satellites [1], [2] et [3] (trois satellites pour une localisation en deux dimensions et quatre satellites pour une localisation en trois dimensions). Une fois déterminées ces distances [d1], [d2] et [d3], le récepteur peut déterminer sa position à l'intersection des sphères dont le centre est matérialisé par la position de chacun des satellites eux-mêmes et dont le rayon est fourni par la distance [di]. La mesure de distance se fait par chronométrage de temps d'arrivée d'un signal radio électrique provenant du satellite. Il s'ensuit que les informations essentielles provenant du satellite via le message de navigation et que doit traiter le récepteur sont constituées par le couple (date d'émission, position du satellite au moment de l'émission). Le satellite transmet dans son message de navigation ses éphémérides (paramètres Képleriens) permettant au récepteur de calculer la position du satellite dans un référentiel lié à la terre. Les éphémérides sont constituées dans le cas de GPS de 16 paramètres.

| M0 | Anomalie Moyenne |
|----|------------------|
| Dn | Déplacement Moyen |
| E | Excentricité |

(suite)

| (A)1/2 | Racine du demi grand axe |
|---|---|
| OMEGA 0 | Longitude du noeud ascendant |
| 10 | Inclinaison |
| W | Argument de périgée |
| OMEGA DOT | Dérivée temporelle de l'ascension droite |
| I DOT | Dérivée temporelle de l'inclinaison |
| Cuc | Amplitude cosinus de l'harmonique du terme de correction de l'argument de latitude |
| Cus | Amplitude sinus de l'harmonique du terme de correction de l'argument de latitude |
| Crc | Amplitude cosinus de l'harmonique du terme de correction du rayon de l'orbite |
| Crs | Amplitude sinus de l'harmonique du terme de correction du rayon de l'orbite |
| Cic | Amplitude cosinus de l'harmonique du terme de correction de l'angle d'inclinaison |
| Cis | Amplitude sinus de l'harmonique du terme de correction de l'angle d'inclinaison |

Ces paramètres sont répétés toutes les 30 secondes dans le message de navigation.

La position du satellite étant obtenue, il reste au récepteur à détecter l'heure d'émission du message afin de déduire le temps de propagation de l'onde et par suite la distance le séparant du satellite, et ainsi le rayon d'une des trois sphères nécessaires. Comme indiqué précédemment, l'heure fait aussi partie du contenu du message de navigation diffusé par le satellite. Cette heure est répétée toutes les 6 secondes. Cependant, il convient d'appliquer à l'heure lue dans le message de navigation une correction d'horloge satellitaire afin de ramener l'heure transmise dans une référence système commune à tous les satellites. Cette correction est, quant à elle, transmise toutes les 30 secondes.

En conclusion, il apparaît clairement qu'un récepteur ne peut être en mesure de déterminer sa position qu'au bout d'un temps minimum de 30 secondes après avoir acquis le signal. L'acquisition du signal s'entend par la toute première opération à effectuer par le récepteur, qui lui permet de se synchroniser fréquentiellement et temporellement sur les trains de bits transmis, phase essentielle pour la démodulation du message de navigation. L'acquisition consiste pour le récepteur à effectuer une recherche en temps-fréquence de l'énergie du signal provenant du satellite. L'accrochage fréquentiel sur le signal du satellite consiste pour le récepteur à s'accorder sur la fréquence à laquelle le signal du satellite est reçu. Le récepteur possède trois incertitudes le conduisant à effectuer cette recherche :

- Effet Doppler lié à la mobilité du satellite,
- Effet Doppler lié à la mobilité de l'utilisateur,
- Incertitude liée à la précision de l'horloge récepteur.

L'accrochage temporel consiste, pour le récepteur, à identifier une transition de code du signal reçu. Le code d'étalement dans le cas du GPS étant périodique de période d'1 ms, la recherche temporelle s'effectue sur un horizon d'1 ms. Une fois la transition de code identifiée, il est connu par l'homme de l'art comment identifier une transition bit puis la synchronisation trame diffusée dans le message de navigation.

Cette recherche temps-fréquence est très coûteuse en termes de complexité du récepteur et limite d'autant plus la performance du récepteur.

En résumé, le temps mis par un récepteur pour fournir une première position est contraint par une première phase très coûteuse de recherche de synchronisation temps-fréquence mais aussi par la lecture d'informations élémentaires sur le signal de navigation (supérieur à 30s).

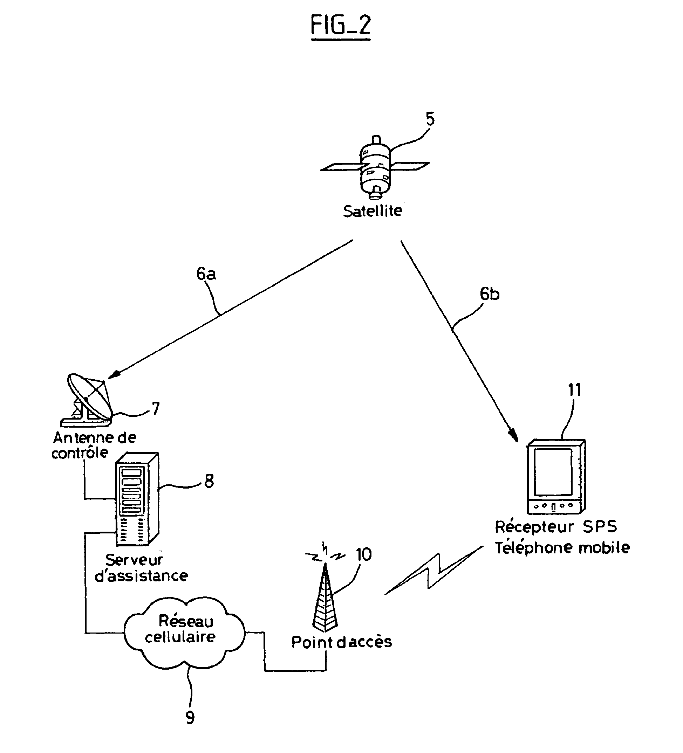

La méthode connue de l'homme de l'art pour palier ce problème est connue sous le nom de GPS Assisté ou GNSS assisté. Cette méthode consiste à coupler un système de télécommunication cellulaire et un récepteur de signaux de navigation par satellites. Ce procédé est décrit en figure 2. Il suppose que le récepteur de signaux de navigation par satellite soit couplé à un récepteur de télécommunication cellulaire [11]. Un équipement du réseau communément appelé Serveur de données d'assistance [8] écoute en permanence les satellites de la constellation satellitaire via un signal radioélectrique [6a] et une antenne de contrôle référencée [7]. Les informations du message de navigation de chaque satellite sont alors stockées par le serveur [8]. Lorsque le récepteur [11] recherche sa position, il requiert un certain nombre de données d'assistance via une communication par une station de base [10] du réseau cellulaire [9] vers le serveur de données d'assistance. Les données d'assistance sont alors renvoyées par le serveur [8], vers le récepteur [11] via la station de base [10]. Ces données d'assistance facilite le traitement du signal [6b] reçu par le récepteur [11] provenant du satellite [5], et confère au récepteur une performance accrue, entre autres, en termes de temps de calcul. En effet, les données d'assistance peuvent être du type suivant :

- Contenu du message de navigation diffusé dans les signaux [6b] et [6a]. Le contenu est renvoyé avec un débit bien plus grand que le débit du message de navigation. Les temps mis pour acheminer les données essentielles à la détermination de la position passe ainsi de 30 secondes à 1 à 2 secondes.

- Une pré localisation du récepteur [11]. En effet, le récepteur [11] étant connecté à la station de base [10], le serveur [8] est en mesure de savoir que le récepteur se trouve dans le voisinage de la station de base [10]. Typiquement, dans un réseau de type GSM, la dimension des cellules est inférieure à 35km.

- Une référence horaire. Le serveur [8] recevant les données du satellite [5], est en mesure de connaître l'heure du système satellitaire et par suite de la diffuser au récepteur [11]. La plupart des réseaux de communication cellulaire étant asynchrones, la référence horaire transmise ne peut atteindre une précision que de l'ordre de 2 à 3 secondes.

- Différents types de corrections : corrections de vitesse de propagation, correction d'horloge bord du satellite, correction de propagation locale, etc.

La connaissance d'une pré-localisation, des éphémérides des satellites et d'une référence horaire approximative permet au récepteur de calculer l'effet Doppler des satellites en vue, diminuant grandement l'incertitude fréquentielle à balayer lors de la phase d'acquisition. De même, les éphémérides des satellites étant connues via la communication avec le serveur [8], il devient inutile pour le récepteur [11] de démoduler ces données sur le message de navigation [6b], ce qui élimine la contrainte de 30 secondes mise en évidence précédemment pour calculer la position. Il suffit alors au récepteur de déterminer un événement horaire sur le signal du satellite [6b], soit, en d'autres termes, de trouver la transition de code d'étalement puis l'heure transmise, le TOW sur le signal GPS qui passe toutes les 6 secondes. Il apparaît ainsi clairement un gain de performance notable, tant en ce qui concerne le temps nécessaire au calcul d'un point de localisation qu'en ce qui concerne la sensibilité. On entend par sensibilité, la puissance minimum du signal reçu par le récepteur lui permettant un traitement adéquat.

L'exemple d'assistance est donnée dans un réseau cellulaire de type GSM, il va de soi qu'il peut être étendu à d'autres systèmes tels que des systèmes de type WIFI, WIMAX.

Cependant, même utilisés suivant un mode d'assistance évoqué ci-dessus, les systèmes de localisation par satellites possède une limitation liée à l'environnement du récepteur et plus particulièrement liée à l'atténuation radio électrique des matériaux entourant le récepteur. Ces limites sont en particulier mises en évidence à l'intérieur des bâtiments.

Les équipes de Recherche & Développement de la Demanderesse ont eu l'initiative de considérer, pour les espaces intérieurs des bâtiments, des techniques de triangulation basées sur des systèmes de communications tels que le WIFI, le WIMAX ou l'ultra large bande. La technologie la plus répandue aujourd'hui repose, en outre, sur une triangulation sur les signaux WIFI. Cette triangulation est opérée par le récepteur en mesurant la distance le séparant de différents points d'accès. La mesure de distance peut, par exemple, être établie par mesure de puissance. Cette mesure de puissance reçue d'un point d'accès donné permet de déduire une distance par comparaison à un modèle d'atténuation en fonction de la distance. Une alternative repose sur la mesure de temps d'arrivée, en tout point identique à la méthodologie employée sur les systèmes de localisation par satellites. Il est à noter que des systèmes, bien connus de l'homme de l'art, reposent sur une calibration de l'environnement radioélectrique, permettant d'associer à chaque position d'un bâtiment, une caractérisation des puissances reçues de chaque point d'accès visibles depuis la position. Un récepteur mesurant une configuration de puissances reçues de tous les points d'accès l'entourant est capable, grâce à cette calibration préalable, de déterminer sa position. Cette technique est bien connue sous le nom de «Finger Printing».

Les limitations de ces derniers systèmes sont multiples : d'une part ils nécessitent un grand nombre de points d'accès dans un bâtiment, mais aussi ils ne fonctionnent plus dès lors que le récepteur sort à l'extérieur du bâtiment où les points d'accès WIFI ne sont plus visibles du terminal.

Les équipes de Recherche & Développement de la Demanderesse ont alors considéré le couplage d'un récepteur WIFI, WIMAX ou UWB (Ultra Wide Band) à un récepteur SPS (Satellite Positioning System) de type GPS ou GPS assisté. Ce couplage permet une localisation à l'intérieur du bâtiment mais aussi à l'extérieur. Néanmoins, le couplage ne permet pas une continuité de service optimale, et présente, en de nombreux environnements, une performance de localisation sous-optimale. En effet, lors de la transition de l'intérieur du bâtiment à l'extérieur du bâtiment, le basculement d'une localisation basée sur les signaux de communication locale (WIFI, WIMAX, UWB) à une localisation basée sur les signaux satellitaires se voit affecté d'une latence liée à l'acquisition des signaux satellitaires comme expliqué précédemment. Cette latence est d'au minimum 30 secondes, comme démontré plus avant. Il s'ensuit une rupture de continuité du service de localisation.

La présente invention a pour but de remédier aux problèmes cités ci-dessus et vise à fournir une méthode de couplage optimal entre un système de localisation à courte portée, tel qu'un système de télécommunication locale basé sur un réseau local répondant à la norme IEEE 802.11, et un système de localisation satellitaire SPS (Satellite Positioning System).

L'invention est originale en ce qu'elle repose notamment sur l'utilisation astucieuse de la représentation cartographique des bâtiments de manière à améliorer le couplage entre la localisation à l'intérieur des bâtiments et le traitement des signaux satellitaires.

A cet effet, l'invention a pour objet un procédé d'acquisition accélérée de signaux satellitaires de positionnement d'un système de localisation par satellites (GPS, Galileo) pour un terminal mobile s'orientant vers l'extérieur d'un immeuble, le terminal mobile couplant un émetteur/récepteur capable d'échanger des signaux d'un système de télécommunication à portée locale (WIFI, UWB ou Bluetooth) à un émetteur/récepteur capable d'échanger des signaux satellitaires de positionnement du système de localisation par satellites (GPS, GPS assisté, Galileo, Galileo assisté), caractérisé en ce que le procédé comporte les étapes suivantes:

- une étape de détermination de la position approximative du terminal par mesure d'un paramètre d'un signal provenant d'au moins un point d'accès du système de télécommunication à portée locale (WIFI, UWB ou Bluetooth), dès lors que le terminal en quête d'une information de localisation détecte un tel point d'accès,
- une étape de détermination des orientations des différents satellites du système de localisation par satellites capables d'être perçus de la position déterminée du terminal,
- une étape de détermination de la probabilité d'acquisition des signaux venant des différents satellites, en fonction de l'azimut et l'élévation de chacun desdits satellites perçus et d'un coefficient d'atténuation d'ondes radioélectriques pour la position déterminée du terminal connu d'un système de représentation cartographique d'immeubles et de représentation de leur architecture intérieure, celui-ci étant apte à associer à chaque position dans un immeuble une distribution de probabilité d'acquisition d'un signal satellitaire provenant d'une direction donnée,
- une étape de recherche des signaux satellitaires venant desdits satellites dont la probabilité de réception dépasse un certain seuil,
- une étape de synchronisation du terminal sur le ou les signaux satellitaires acquis.

Selon un mode de réalisation, antérieurement à l'étape de détermination de la probabilité d'acquisition des signaux venant des différents satellites, intervient une étape de transmission par le système de représentation cartographique vers un serveur de localisation, d'une carte locale représentant l'immeuble et son architecture intérieure dans lequel se trouve ledit terminal.

L'invention a également pour objet un système hybride de localisation destiné à l'acquisition accélérée de signaux satellitaires pour un terminal mobile s'orientant vers l'extérieur d'un immeuble, le système hybride de localisation comportant :

- un système de télécommunication à portée locale (WIFI, UWB ou Bluetooth),
- un système de localisation par satellites (GPS, Galileo),
- le terminal mobile couplant un émetteur/récepteur capable d'échanger des signaux de télécommunication locale (WIFI, UWB ou Bluetooth) à un émetteur/récepteur capable d'échanger des signaux satellitaires (GPS, GPS assisté, Galileo, Galileo assisté),

caractérisé en ce que le système comporte en outre :

- un système de représentation cartographique d'immeubles et de représentation de leur architecture intérieure, apte à associer à chaque position dans un immeuble une distribution de probabilité d'acquisition d'un signal satellitaire provenant d'une direction donnée,
- des moyens pour déterminer la position du terminal par mesure d'un paramètre d'un signal provenant d'au moins un point d'accès du système de télécommunication à portée locale (WIFI, UWB ou Bluetooth), dès lors que le terminal en quête d'une information de localisation détecte un tel point d'accès,
- des moyens pour déterminer des orientations des différents satellites du système de localisation par satellites capables d'être perçus de la position déterminée du terminal,
- des moyens pour déterminer la probabilité d'acquisition des signaux venant des différents satellites, en fonction de l'azimut et l'élévation de chacun desdits satellites perçus et d'un coefficient d'atténuation d'ondes radioélectriques pour la position déterminée du terminal connu du système de représentation cartographique,
- des moyens de recherche des signaux satellitaires venant desdits satellites dont la probabilité de réception dépasse un certain seuil,

- des moyens de synchronisation du terminal sur le ou les signaux satellitaires acquis.

Selon un mode de réalisation, le système de représentation cartographique d'immeubles et de représentation de leur architecture intérieure est intégré dans un serveur de localisation mettant en oeuvre une technique de localisation assistée dite Assisted-GPS.

D'autres caractéristiques et avantages de l'invention apparaîtront plus clairement à la lecture, non limitative, de la description suivante de l'exemple particulier de réalisation de l'invention en référence aux figures suivantes :

- la figure 1, déjà décrite, représente la méthode connue de détermination de la position d'un récepteur par GPS,
- la figure 2, déjà décrite, représente la méthode connue de localisation par GPS Assisté ou GNSS assisté,
- la figure 3 représente un système de localisation selon un mode de réalisation de l'invention
- la figure 4 représente schématiquement une vue agrandie du serveur de localisation et du terminal de la figure 3.

L'invention concerne un procédé d'acquisition accélérée de signaux satellitaires pour un terminal mobile s'orientant vers l'extérieur d'un immeuble (ou bâtiment). Cette méthode est mise en oeuvre dans un système hybride de localisation comportant :

- un système de télécommunication locale de type WIFI, UWB ou Bluetooth, ainsi qu'expliqué en introduction de la présente demande,
- un système de localisation par satellite, de type GPS ou Galileo assisté par exemple, ainsi qu'expliqué en introduction de la présente demande,
- au moins un terminal mobile couplant un émetteur/récepteur capable d'échanger des signaux de télécommunication locale (WIFI, UWB ou Bluetooth) à un émetteur/récepteur capable d'échanger des signaux satellitaires de type GPS ou GPS assisté,
- un système de représentation cartographique des bâtiments et de représentation des éléments constituant les bâtiments. Ce système de représentation cartographique permet, en outre, d'associer à chaque position dans un bâtiment une distribution de probabilité de réception d'un signal satellitaire provenant d'une direction donnée.

Dans ce système, la méthode mise en oeuvre comporte les étapes suivantes :

- une étape de détermination de la position du terminal grâce aux signaux du système de télécommunication locale (WIFI), selon un des procédés évoqués plus haut, dès lors que le terminal en quête d'une information de localisation détecte un point d'accès du système de télécommunication locale (WIFI),
- une étape de détermination des orientations des différents satellites du système de localisation satellitaire vus de la position du terminal,
- une étape de détermination de la probabilité de réception des signaux venant des différents satellites en fonction des résultats fournis par le système de représentation cartographique du bâtiment,
- une étape de recherche des signaux satellitaires venant desdits satellites dont la probabilité d'acquisition dépasse un certain seuil,
- une étape de synchronisation du terminal sur le ou les signaux satellitaires acquis.

La détermination des orientations des satellites du système de localisation satellitaire s'effectue par la connaissance des almanachs de la constellation ou des éphémérides des satellites. Elle consiste à déterminer l'azimut et l'élévation de chaque satellite. A cette fin, il convient :

1. De déterminer la position de chaque satellite, comme décrit dans l'ICD 200C GPS à partir des almanachs ou des éphémérides.
2. Déterminer l'élévation de chaque satellite, comme suit

$$\begin{cases} \alpha = \dfrac{\pi}{2} - A\cos\left( \dfrac{\dfrac{(X_s - X_u)X_u + (Y_s - Y_u)Y_u}{\sqrt{a^2 - X_u^2 - Y_u^2}}}{\dfrac{(X_u^2 + Y_u^2)[(X_s - X_u)^2 + (Y_s - Y_u)^2]}{\sqrt{(a^2 - X_u^2 - Y_u^2)}}} \right), & if\ \phi \geq 0 \\[4em] \alpha = -\dfrac{\pi}{2} + A\cos\left( \dfrac{\dfrac{(X_s - X_u)X_u + (Y_s - Y_u)Y_u}{\sqrt{a^2 - X_u^2 - Y_u^2}}}{\dfrac{(X_u^2 + Y_u^2)[(X_s - X_u)^2 + (Y_s - Y_u)^2]}{\sqrt{(a^2 - X_u^2 - Y_u^2)}}} \right), & if\ \phi < 0 \end{cases}$$

où Xs,Ys,Zs sont les coordonnées du satellite considéré dans un référentiel lié à la terre,
et où Xu,Yu,Zu sont les cordonnées du terminal déterminé par exemple grâce au réseau WIFI,
$\alpha$ est l'élévation du satellite considéré et $\phi$ la latitude du terminal,
a = 6378137.0 km (demi grand axe de la terre), b = 6356752.3142 km (demi petit axe de la terre).

3. Déterminer l'azimut de chaque satellite, comme suit en reprenant les même notations :

$$\vec{n}\begin{cases} n_1 = \dfrac{1}{\sqrt{\dfrac{b^2}{a^2}\dfrac{x_u^2 + y_u^2}{a^2 - (x_u^2 + y_u^2)} + 1}}\dfrac{b}{a}\dfrac{x_u}{\sqrt{a^2 - (x_u^2 + y_u^2)}} \\[2em] n_2 = \dfrac{1}{\sqrt{\dfrac{b^2}{a^2}\dfrac{x_u^2 + y_u^2}{a^2 - (x_u^2 + y_u^2)} + 1}}\dfrac{b}{a}\dfrac{y_u}{\sqrt{a^2 - (x_u^2 + y_u^2)}}, if\ \phi_u > 0, \\[2em] n_3 = \dfrac{1}{\sqrt{\dfrac{b^2}{a^2}\dfrac{x_u^2 + y_u^2}{a^2 - (x_u^2 + y_u^2)} + 1}} \end{cases} \qquad \vec{n}\begin{cases} n_1 = \dfrac{1}{\sqrt{\dfrac{b^2}{a^2}\dfrac{x_u^2 + y_u^2}{a^2 - (x_u^2 + y_u^2)} + 1}}\dfrac{b}{a}\dfrac{x_u}{\sqrt{a^2 - (x_u^2 + y_u^2)}} \\[2em] n_2 = \dfrac{1}{\sqrt{\dfrac{b^2}{a^2}\dfrac{x_u^2 + y_u^2}{a^2 - (x_u^2 + y_u^2)} + 1}}\dfrac{b}{a}\dfrac{y_u}{\sqrt{a^2 - (x_u^2 + y_u^2)}}, else \\[2em] n_3 = \dfrac{1}{\sqrt{\dfrac{b^2}{a^2}\dfrac{x_u^2 + y_u^2}{a^2 - (x_u^2 + y_u^2)} + 1}} \end{cases}$$

$$Azimuth = \begin{cases} ACOS\left[\dfrac{(X_s - X_u)v_1 + (Y_s - Y_u)v_2 + (Z_s - Z_u)v_3}{\sqrt{(X_s - X_u)^2 + (Y_s - Y_u)^2 + (Z_s - Z_u)^2}}\right] & if\ (X_s - X_u)u_1 + (Y_s - Y_u)u_2 + (Z_s - Z_u)u_3 \geq 0 \\[2em] 2\pi - ACOS\left[\dfrac{(X_s - X_u)v_1 + (Y_s - Y_u)v_2 + (Z_s - Z_u)v_3}{\sqrt{(X_s - X_u)^2 + (Y_s - Y_u)^2 + (Z_s - Z_u)^2}}\right] & else \end{cases}$$

4. Déterminer dans la direction donnée par l'azimut et l'élévation la probabilité de blocage du signal satellitaire, et ce grâce au système de représentation cartographique.

Selon un mode de réalisation du système de représentation cartographique, il est associé à chaque élément de la cartographie du bâtiment un coefficient d'atténuation de l'onde radioélectrique. Il devient alors aisé, après détermination de l'azimut-élévation, de déterminer les points de percement du signal radioélectrique provenant du satellite et d'y associer une atténuation agrégée et par suite une probabilité de blocage.

Le procédé d'acquisition accéléré selon l'invention présente plusieurs avantages. Le premier avantage consiste à pouvoir sélectionner les satellites sur lesquels une tentative d'acquisition est lancée par le terminal. Ceci a pour effet une économie évidente de consommation d'énergie par le terminal. Le gain majeur se traduit cependant lors de la transition de l'intérieur du bâtiment vers l'extérieur et plus exactement lors d'un basculement de technologie de localisation WIFI vers GPS. En effet, le procédé proposé ici permet, en outre, à moindre coût énergétique pour le terminal, de synchroniser le terminal sur le système satellitaire. Lorsque le terminal quitte la zone de réception du signal de télécommunication locale, la localisation est établie par triangulation de signaux satellitaires. Cependant, le récepteur étant déjà synchronisé sur le système satellitaire, la position étant connue à mieux que 300 mètres près du fait de la localisation précédente établie par le réseau WIFI, la nécessité de la phase d'acquisition des signaux satellitaires est levée, et une information de position peut être fournie dès la première seconde hors du bâtiment.

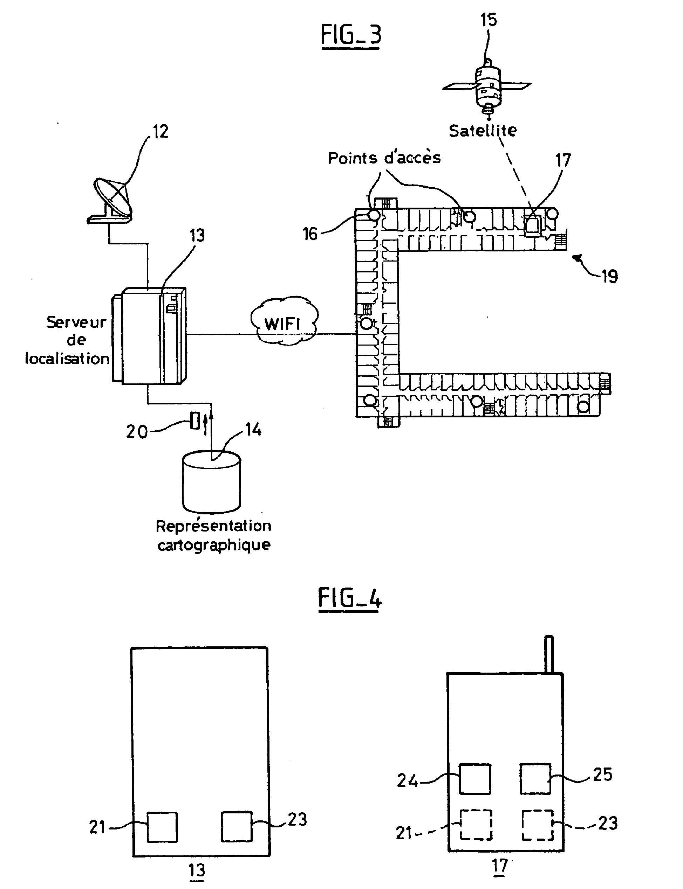

Une mise en oeuvre du procédé est explicité dans la suite à la lumière de la figure 3. Selon le mode de réalisation de l'invention, un système hybride 18 comporte un terminal [17] compatible WIFI et GPS assisté. Le terminal effectue des mesures de puissance des différents points d'accès WIFI [16] d'un immeuble [19] entourant le terminal [17] et transmet ces mesures vers un serveur de localisation [13]. Le serveur de localisation [13] détermine, grâce à des moyens de détermination 21 connus, la position approximative du terminal [17] et fournit cette position au terminal [17]. Le serveur de localisation [13] compare également la position du terminal [17] à une base de données cartographiques [14], afin de déterminer l'ensemble des satellites [15] potentiellement visibles depuis la position du terminal [17]. Alternativement, le traitement décrit ci-dessus peut être conservé au sein du terminal en y envoyant une carte locale 20, représentant l'immeuble et son architecture intérieure dans lequel se trouve le terminal. Le terminal est alors à même d'en déduire, par ses mesures de puissance et ses moyens de détermination 21 internes, sa position approximative et les satellites visibles.

Ensuite, le serveur de localisation [13] remplit également la fonction de serveur de données d'assistance GPS assisté. Il collecte les différentes données d'assistance via son antenne de référence [12]. Le serveur de localisation [13] fournit au terminal [17] les éphémérides des satellites [15]. Il comporte des moyens [23] pour déterminer la probabilité d'acquisition des signaux venant des différents satellites, en fonction de l'azimut et l'élévation des différents satellites du système de localisation par satellites capables d'être perçus de la position déterminée du terminal, et en fonction d'un coefficient d'atténuation d'ondes radioélectriques pour la position déterminée du terminal connu du système de représentation cartographique.

Alternativement, le serveur transmet uniquement les éphémérides et le terminal intègre les moyens [23] pour déterminer la probabilité d'acquisition des signaux venant des différents satellites.

Le terminal comporte également des moyens 24 de recherche des signaux satellitaires venant desdits satellites dont la probabilité de réception dépasse un certain seuil, ainsi que des moyens 25 de synchronisation du terminal sur le ou les signaux satellitaires acquis.

Le terminal [17] acquière alors ainsi le satellite [15] et se synchronise sur le signal parvenant dudit satellite [15]. Il est à noter que les mesures faites sur le signal reçu du satellite [15] peuvent être utilisées pour complémenter les mesures WIFI afin de déterminer la position du terminal.

Bien entendu, l'invention n'est pas limitée au mode de réalisation décrit dans la présente demande mais s'étend à tout mode de réalisation couvert par les revendications.

## Revendications

1. Procédé d'acquisition accélérée de signaux satellitaires de positionnement d'un système de localisation par satellites (GPS, Galileo) pour un terminal mobile (17) s'orientant de l'intérieur vers l'extérieur d'un immeuble (19), le terminal mobile couplant un émetteur/récepteur capable d'échanger des signaux d'un système de télécommunication à portée locale (WIFI, UWB ou Bluetooth) à un émetteur/récepteur capable d'échanger des signaux satellitaires de positionnement du système de localisation par satellites (GPS, GPS assisté, Galileo, Galileo assisté), **caractérisé en ce que** le procédé comporte les étapes suivantes :

   - une étape de détermination de la position approximative du terminal par mesure d'un paramètre d'un signal provenant d'au moins un point d'accès (16) du système de télécommunication à portée locale (WIFI, UWB ou Bluetooth), dès lors que le terminal en quête d'une information de localisation détecte un tel point d'accès,
   - une étape de détermination des orientations des différents satellites du système de localisation par satellites capables d'être perçus de la position déterminée du terminal,
   - une étape de détermination de la probabilité d'acquisition des signaux venant des différents satellites, en fonction de l'azimut et l'élévation de chacun desdits satellites perçus et d'un coefficient d'atténuation d'ondes radioélectriques pour la position déterminée du terminal connu d'un système (14) de représentation cartographique d'immeubles et de représentation de leur architecture intérieure, celui-ci étant apte à associer à chaque position dans un immeuble une distribution de probabilité d'acquisition d'un signal satellitaire provenant d'une direction donnée,
   - une étape de recherche des signaux satellitaires venant desdits satellites dont la probabilité de réception dépasse un certain seuil,

- une étape de synchronisation du terminal sur le ou les signaux satellitaires acquis.

2. Procédé selon la revendication 1, **caractérisé en ce que**, antérieurement à l'étape de détermination de la probabilité d'acquisition des signaux venant des différents satellites, intervient une étape de transmission par le système de représentation cartographique vers le terminal d'une carte locale (20) représentant l'immeuble et son architecture intérieure dans lequel se trouve ledit terminal.

3. Système hybride de localisation destiné à l'acquisition accélérée de signaux satellitaires de positionnement pour un terminal mobile (17) s'orientant de l'intérieur vers l'extérieur d'un immeuble (19), le système hybride (18) de localisation comportant :

   - un système de télécommunication à portée locale (WIFI, UWB ou Bluetooth),
   - un système de localisation par satellites (GPS, Galileo),
   - le terminal mobile couplant un émetteur/récepteur capable d'échanger des signaux de télécommunication locale (WIFI, UWB ou Bluetooth) à un émetteur/récepteur capable d'échanger des signaux satellitaires de positionnement par satellites (GPS, GPS assisté, Galileo, Galileo assisté),

   **caractérisé en ce que** le système comporte en outre :

   - un système (14) de représentation cartographique d'immeubles et de représentation de leur architecture intérieure, apte à associer à chaque position dans un immeuble une distribution de probabilité d'acquisition d'un signal satellitaire provenant d'une direction donnée,
   - des moyens (21) pour déterminer la position du terminal par mesure d'un paramètre d'un signal provenant d'au moins un point d'accès (16) du système de télécommunication à portée locale (WIFI, UWB ou Bluetooth), dès lors que le terminal en quête d'une information de localisation détecte un tel point d'accès,
   - des moyens (23) pour déterminer la probabilité d'acquisition des signaux venant des différents satellites, en fonction de l'azimut et l'élévation des différents satellites du système de localisation par satellites capables d'être perçus de la position déterminée du terminal, et en fonction d'un coefficient d'atténuation d'ondes radioélectriques pour la position déterminée du terminal connu du système de représentation cartographique,
   - des moyens (24) de recherche des signaux satellitaires venant desdits satellites dont la probabilité de réception dépasse un certain seuil,
   - des moyens (25) de synchronisation du terminal sur le ou les signaux satellitaires acquis.

4. Système selon la revendication 3, **caractérisé en ce que** le système (14) de représentation cartographique d'immeubles et de représentation de leur architecture intérieure est intégré dans un serveur (13) de localisation mettant en oeuvre une technique de localisation assistée dite Assisted-GPS ou Assisted-GNSS.

## Claims

1. A method of accelerated acquisition of positioning satellite signals from a satellite location system (GPS, Galileo) for a mobile terminal (17) moving from the interior to the exterior of a building (19), the mobile terminal coupling a transceiver capable of exchanging signals of a local range telecommunication system (WIFI, UWB or Bluetooth) to a transceiver capable of exchanging positioning satellite signals of the satellite location system (GPS, assisted GPS, Galileo, assisted Galileo),
   which method includes the hollowing steps:

   - a step of determination of the approximate position of the terminal by measuring a parameter of a signal coming from at least one access point (16) of the local range telecommunication system (WIFI, UWB or Bluetooth) immediately the terminal searching for location information detects such an access point,
   - a step of determination of the orientations of the various satellites of the satellite location system capable of being perceived from the determined position of the terminal,
   - a step of determination of the probability of acquisition of signals coming from the various satellites, as a function of the azimuth and the elevation of each of said satellites perceived and a radio wave attenuation coefficient for the determined position of the terminal known to a system (14) of graphical representation of buildings and of representation of their interior architecture, the latter system being adapted to associate with each position in a building a distribution of probability of acquisition of a satellite signal coming from a given direction,

9

- a step of searching for satellite signals coming from said satellites for which the probability or reception exceeds a certain threshold,
- a step of synchronization of the terminal to the satellite signal or signals acquired.

2. A method according to claim 1, wherein, before the step of determination of the probability of acquisition of signals coming from the various satellites, there is a step of transmission by the cartographic representation system to the terminal of a local map (20) representing the building and its interior architecture in which said terminal is situated.

3. A hybrid location system for accelerated acquisition of positioning satellite signals for a mobile terminal (17) moving from the interior toward the exterior of a building (19), the hybrid location system (18) including:

- a local range telecommunication system (WIFI, UWB or Bluetooth),
- a satellite location system (GPS, Galileo),
- the mobile terminal coupling a transceiver capable of exchanging local telecommunication signals (WIFI, UWB or Bluetooth) to a transceiver capable of exchanging positioning satellite signals (GPS, assisted GPS, Galileo, assisted Galileo),

which system further includes:

- a system (14) of cartographic representation of buildings and of representation of their interior architecture adapted to associate with each position in a building a distribution of probability of acquisition of a satellite signal coming from a given direction,
- means (21) for determining the position of the terminal by measurement of a parameter of a signal coming from at least one access point (16) of the local range telecommunication system (WIFI, UWB or Bluetooth) immediately the terminal searching for location information detects such an access point,
- means (23) for determining the probability of acquisition of signals coming from the various satellites as a function of the azimuth and the elevation of the various satellites of the satellite location system capable of being perceived from the determined position of the terminal and as a function of a radio wave attenuation coefficient for the determined position of the terminal known to the cartographic representation system,
- means (24) for searching for satellite signals coming from said satellites for which the probability of reception exceeds a certain threshold,
- means (25) for synchronization of the terminal to the satellite signal or signals acquired.

4. A system according to claim 3, wherein the system (14) of cartographic representation of buildings and of representation of their interior architecture is integrated into a location server (13) using an Assisted-GPS or Assisted-GNSS location technique.

**Patentansprüche**

1. Verfahren zur beschleunigten Erfassung von Satellitenpositionierungssignalen eines satellitengestützten Ortungssystems (GPS, Galileo) für ein mobiles Endgerät (17), welches sich vom Inneren eines Gebäudes (19) nach außen hin bewegt, wobei das mobile Endgerät einen Sender/Empfänger, welcher fähig ist, Signale eines Telekommunikationssystems mit lokaler Reichweite (WIFI, UWB oder Bluetooth) auszutauschen, an einen Sender/Empfänger, welcher fähig ist, Satellitenpositionierungssignale des satellitengestützten Ortungssystems (GPS, unterstütztes GPS, Galileo, unterstütztes Galileo) auszutauschen, koppelt,
**dadurch gekennzeichnet, dass** das Verfahren die folgenden Schritte umfasst:

- Einen Schritt der Ermittlung der annähernde Position des Endgeräts durch Messen eines Parameters eines von mindestens einem Zugangspunkt (16) des Telekommunikationssystems mit lokaler Reichweite (WIFI, UWB oder Bluetooth) kommenden Signals, wenn das Endgerät, welches nach einer Ortungsinformation sucht, einen solchen Zugangspunkterkennt,
- einen Schritt der Ermittlung der Ausrichtungen der verschiedenen Satelliten des satellitengestützten Ortungssystems, welche von der ermittelten Position des Endgeräts aus wahrgenommen werden können,
- einen Schritt der Ermittlung der Wahrscheinlichkeit der Erfassung der Signale, welche von verschiedenen Satelliten kommen, entsprechend dem Azimut und der Elevation eines jeden der besagten wahrgenommenen Satelliten und einem Dämpfungskoeffizienten von elektromagnetischen Wellen für die ermittelte Position eines von dem System (14) für die kartografische Darstellung von Gebäuden und für die Darstellung der Innenarchitektur der Gebäude gekannten Endgeräts, wobei dieses System fähig ist, jeder Position in einem Gebäude eine Verteilung der Erfassungswahrscheinlichkeit eines aus einer gegebenen Richtung kommenden Satellitensignals zuzuordnen,

- einen Schritt des Suchens der Satellitensignale, welche von den besagten Satelliten kommen, deren Empfangswahrscheinlichkeit einen bestimmten Grenzwert überschreitet,
- einen Schritt des Synchronisierens des Endgeräts mit dem oder den erfassten Satellitensignal(en).

**2.** Verfahren nach Anspruch 1, **dadurch gekennzeichnet, dass** vor dem Schritt der Ermittlung der Wahrscheinlichkeit der Erfassung der Signale, welche von den verschiedenen Satelliten kommen, ein Schritt der Übertragung einer lokalen Karte (20), welche das Gebäude und dessen Innenarchitektur darstellt, in welchem sich das besagte Endgerät befindet, durch das System für die kartografische Darstellung an das Endgerät erfolgt.

**3.** Hybrides Ortungssystem zur beschleunigten Erfassung von Satellitenpositionierungssignalen für ein mobiles Endgerät (17), welches sich vom Inneren eines Gebäudes (19) nach außen hin bewegt, wobei das hybride Ortungssystem (18) umfasst:

- Ein Telekommunikationssystem mit lokaler Reichweite (WIFI, UWB oder Bluetooth),
- ein satellitengestütztes Ortungssystem (GPS, Galileo),
- das mobile Endgerät, welches einen Sender/Empfänger, der fähig ist, lokale Telekommunikationssignale (WIFI, UWB oder Bluetooth) auszutauschen, an einen Sender/Empfänger, der fähig ist, Satellitenpositionierungssignale über Satelliten (GPS, unterstütztes GPS, Galileo, gestütztes Galileo) auszutauschen, koppelt, **dadurch gekennzeichnet, dass** das System weiterhin umfasst:
- Ein System (14) für die kartografische Darstellung von Gebäuden und für die Darstellung deren Innenarchitektur, welches fähig ist, jeder Position in einem Gebäude eine Verteilung der Erfassungswahrscheinlichkeit eines aus einer gegebenen Richtung kommenden Satellitensignals zuzuordnen,
- Mittel (21) zur Ermittlung der Position des Endgerats durch Messen eines Parameters eines von mindestens einem Zugangspunkt (16) des Telekommunikationssystems mit lokaler Reichweite (WIFI, UWB oder Bluetooth) kommenden Signals, wenn das Endgerät, welches nach einer Ortungsinformation sucht, einen solchen Zugangspunkt erkennt,
- Mittel (23) zur Ermittlung der Wahrscheinlichkeit der Erfassung der Signale, welche von verschiedenen Satelliten kommen, entsprechend dem Azimut und der Elevation der verschiedenen Satelliten des satellitengestützten Ortungssystems, welche von der ermittelten Position des Endgeräts aus wahrgenommen werden können, und entsprechend einem Dämpfungskoeffizienten von elektromagnetischen Wellen für die ermittelte Position des von dem System für die kartografische Darstellung gekannten Endgeräts,
- Mittel (24) zum Suchen der Satellitensignale, welche von den besagten Satelliten kommen, deren Empfangswahrscheinlichkeit einen bestimmten Grenzwert überschreiten,
- Mittel (25) zum Synchronisieren des Endgeräts mit dem oder den erfassten Satellitensignal(en).

**4.** System nach Anspruch 3, **dadurch gekennzeichnet, dass** das System (14) für die kartografische Darstellung von Gebäuden und für die Darstellung der Innenarchitektur dieser Gebäude in einem Ortungsserver (13) integriert ist, welcher eine unterstützte Ortungstechnik, die sogenannte Assisted-GPS oder Assisted-GNSS, anwendet.

## FIG_1

## FIG_2

5

Satellite

6a

6b

7

Antenne de
contrôle

8

Serveur
d'assistance

11

Récepteur SPS
Téléphone mobile

10

Réseau
cellulaire

Point d'accès

9

## FIG_3

Satellite

Points d'accès

Serveur de localisation

WIFI

Représentation cartographique

## FIG_4

13

17